**Europäisches Patentamt**

**European Patent Office**

**Office européen des brevets**

(19)

(11) Veröffentlichungsnummer: **0 092 804**

**B1**

(12) **EUROPÄISCHE PATENTSCHRIFT**

(45) Veröffentlichungstag der Patentschrift:
13.08.86

(21) Anmeldenummer: **83103902.9**

(22) Anmeldetag: **21.04.83**

(51) Int. Cl.⁴: **A 01 D 41/02**

(54) **Mähdrescher.**

(30) Priorität: **23.04.82 US 371045**

(43) Veröffentlichungstag der Anmeldung:
**02.11.83 Patentblatt 83/44**

(45) Bekanntmachung des Hinweises auf die Patenterteilung:
**13.08.86 Patentblatt 86/33**

(84) Benannte Vertragsstaaten:
**BE DE FR GB IT**

(56) Entgegenhaltungen:
**AT-B-178 750**
**US-A-4 317 326**

(73) Patentinhaber: **DEERE & COMPANY, 1 John Deere Road, Moline Illinois 61265 (US)**

(72) Erfinder: **Riedinger, Franz, Hauptstrasse 101, D-6650 Homburg- Einoed. (DE)**

(74) Vertreter: **Sartorius, Peter, DEERE & COMPANY European Office, Patent Department Postfach 503 Steubenstrasse 36- 42, D-6800 Mannheim 1 (DE)**

## Beschreibung

Die Erfindung bezieht sich auf einen Mähdrescher mit zwei über eine Gelenkeinrichtung verbundenen, um eine vertikale und eine in etwa horizontal verlaufende Achse gegenseitig verstellbaren, je eine Laufradachse aufweisenden hintereinander angeordneten Rahmeneinheiten, wobei die Gelenkeinrichtung aus einem oberen Lenker und einem unteren Lenker gebildet ist, wobei diese Lenker zwei mit Abstand zueinander angeordnet an die Rahmeneinheiten angeschlossen und um quer zur Fahrtrichtung verlaufende horizontale und vertikale Achsen verschwenkbar sind.

Es ist ein Mähdrescher der eingangs aufgeführten Art bekannt (US-A-4 317 326), der aus zwei über eine Gelenkeinrichtung verbundenen Rahmeneinheiten besteht, die gegeneinander um eine horizontal und vertikal verlaufende Achse verschwenkbar sind. Die Gelenkeinrichtung besteht aus einem unteren Lenker sowie zwei oberen einander kreuzenden Lenkern, die über Gelenkbolzen und Kugelgelenke an die einzelnen Rahmeneinheiten angeschlossen sind. Um die auf die Lenker einwirkenden Kräfte während der gegenseitigen Verstellung der einzelnen Rahmeneinheiten zu verringern, sind die beiden oberen einander kreuzenden Lenker relativ nahe an der unteren Begrenzung der beiden Mähdreschereinheiten vorgesehen. Bei einer Schwenkbewegung der hinteren Mähdreschereinheit gegenüber der vorderen Mähdreschereinheit um eine in etwa horizontal verlaufende Achse findet ein relativ großer seitlicher Versatz des oberen Teils der hinteren Mähdreschereinheit gegenüber der vorderen Mähdreschereinheit statt, so daß auf die einzelnen Gelenke bzw. Lenker relativ große Zug- und Druckkräfte einwirken.

Demgegenüber liegt der Erfindung die Aufgabe zugrunde, die einzelnen Anschlußstellen der Gelenkeinrichtung so an den Rahmeneinheiten zu plazieren, daß die auf die Lenker einwirkenden Druck- und Zugkräfte auf ein Minimum reduziert werden können. Diese Aufgabe ist dadurch gelöst worden, daß eine Gelenkstelle des oberen Lenkers im hinteren Bereich der hinteren Rahmeneinheit vorgesehen ist. Durch Verlegung der Gelenkstelle des oberen Lenkers in den hinteren Bereich der hinteren Rahmeneinheit kann auch bei einer Schwenkbewegung der hinteren Rahmeneinheit um eine annähernd horizontal verlaufende Achse der seitliche Versatz des oberen Teils der hinteren Rahmeneinheit besser über den oberen Lenker ausgeglichen werden, so daß die auf die Lenker einwirkenden Zug- und Druckkräfte klein gehalten werden können. Hierzu ist es gemäß der Erfindung vorteilhaft, daß die Gelenkstelle des oberen Lenkers hinter der Achse der Laufräder der hinteren Rahmeneinheit vorgesehen ist. Vorteilhaft ist es außerdem, daß die Gelenkstellen des oberen Lenkers jeweils im Bereich des hinteren Endes der vorderen bzw. hinteren Rahmeneinheit vorgesehen sind. Je länger der obere Lenker zur Verbindung der beiden Rahmeneinheiten ausgebildet ist, das heißt, je größer der Abstand zwischen den Anschlußstellen des oberen Lenkers ist, je geringer ist auch der Verkürzungseffekt zwischen den Anschlußstellen des oberen Lenkers; wenn die hintere Rahmeneinheit bzw. die vordere Rahmeneinheit um eine horizontal verlaufende Achse schwenkt. Dabei ist es vorteilhaft, daß sich der obere Lenker in etwa horizontal dicht an der oberen Begrenzung der hinteren Rahmeneinheit entlang erstreckt. Vorteilhaft ist es auch, daß der Abstand der Gelenkstellen des oberen Lenkers in etwa dem Abstand zwischen den beiden Laufradachsen entspricht und daß der Abstand der Gelenkstellen des oberen Lenkers größer ist als der halbe Abstand zwischen den beiden Laufradachsen. Um die auf die Lenker einwirkenden Druck- und Zugkräfte auch beim Knicklenkungsvorgang klein zu halten, ist es vorteilhaft, daß die vordere Gelenkstelle des oberen Lenkers an der vorderen Rahmeneinheit auf einer vertikal verlaufenden Knicklenkerachse des Mähdreschers liegt. Um das Fahren auf unebenem Gelände zu erleichtern, auch wenn ein Knicklenkungsvorgang ausgeführt wird, ist es vorteilhaft, daß der obere und der untere Lenker einen großen Abstand untereinander aufweisen und jeweils dicht an der oberen bzw. unteren Begrenzung des Mähdreschers bzw. der Rahmeneinheiten vorgesehen sind, wobei der untere Lenker eine gegenseitige Verschwenkung der beiden Rahmeneinheiten um eine in Fahrtrichtung horizontal verlaufende Schwenkachse zuläßt. Ein gutes Fahrverhalten des aus den beiden Rahmeneinheiten bestehenden Mähdreschers wird dadurch gewährleistet, daß die in Fahrtrichtung verlaufende Schwenkachse im Bereich der unteren Begrenzung der hinteren Rahmeneinheit verläuft. Dabei ist es vorteilhaft, daß der Abstand zwischen den beiden Gelenkstellen des oberen Lenkers größer ist als der Abstand zwischen dem oberen und dem unteren Lenker. Durch die Verwendung eines relativ langen Lenkers und den großen Abstand zwischen den oberen und unteren Lenkern wird der nachteilige Knicklenkereffekt auf ein Minimum reduziert, so daß die auf die Gelenke einwirkenden Kräfte sehr klein gehalten werden können. Hierdurch ist auch eine kleinere Dimensionierung der gesamten Lenkeinrichtung möglich.

In der Zeichnung sind zwei Ausführungsbeispiele von zwei über eine Gelenkverbindung verbundenen Rahmeneinheiten eines Mähdreschers nach der Erfindung schematisch dargestellt. Es zeigt:

Fig. 1 eine Seitenansicht eines Mähdreschers mit zwei gelenkig verbundenen Rahmeneinheiten;

Fig. 2 eine Draufsicht des Mähdreschers gemäß Fig. 1;

Fig. 3 einen als Fördervorrichtung ausgebildeten oberen Lenker zur Verbindung der beiden Rahmeneinheiten;

Fig. 4 eine Draufsicht des Mähdreschers gemäß Fig. 1 mit graphischen Angaben über die Bewegung des oberen Teils der hinteren Rahmeneinheit bei langem und kurzem oberen Lenker;

Fig. 5 einen Teilschnitt durch einen unteren Lenker zur Verbindung der beiden Rahmeneinheiten der ebenfalls als Fördervorrichtung ausgebildet ist;

Fig. 6 zwei Lenkzylinder zur Verstellung der beiden Rahmeneinheiten;

Fig. 7 eine Seitenansicht des Mähdreschers mit der in Fig. 5 dargestellten Fördervorrichtung.

In der Zeichnung ist mit 10 die vordere und mit 12 die hintere Rahmeneinheit bezeichnet, die über eine Gelenkvorrichtung verbunden sind, zu der obere und untere Lenker 14 und 16 gehören. Zu der vorderen Rahmeneinheit 10 gehört ein Gehäuse 18, das auf zwei Laufrädern 20 abstützbar ist. Der Mähdrescher wird über eine Verbrennungskraftmaschine 22 angetrieben, die auf der rechten Seite des Gehäuses 18 vorgesehen ist, und die von einem Fahrerstand 24 aus bedienbar ist.

An der vorderen Rahmeneinheit 10 befindet sich eine Erntebergungsvorrichtung 26, über die das Erntegut aufgenommen wird und einer sich in Axialrichtung erstreckenden Dresch- und Trennvorrichtung 28 zugeführt wird. Ausgeschiedenes Korn und Kaff wird einer Reinigungsvorrichtung 30 zugeführt und das Stroh am Ende des Mähdreschers abgegeben. Die Erntebergungsvorrichtung 26, die Dresch- und Trennvorrichtung 28 sowie die Reinigungsvorrichtung 30 befinden sich auf der vorderen Rahmeneinheit 10 im Gehäuse 18 des Mähdreschers.

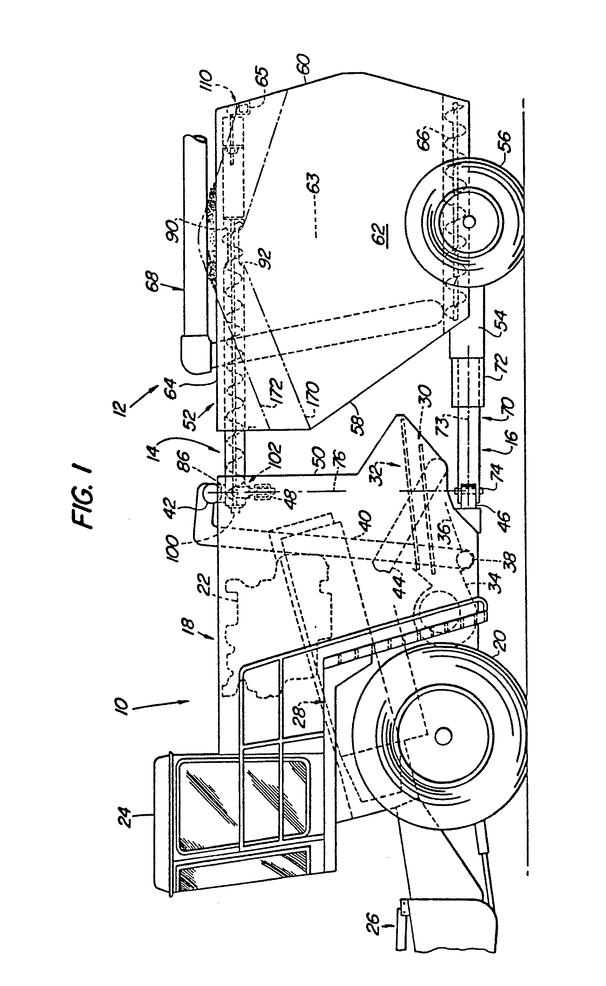

Zu der Reinigungsvorrichtung 30 gehören zwei untereinander angeordnete Reinigungssiebe 32, die über ein Gebläse 34 mit Reinigungsluft beaufschlagt werden. Unterhalb der Reinigungssiebe 32 befindet sich ein Rücklaufboden 36, über den das gereinigte Korn einer Querförderschnecke 38 und dann einem Elevatorförderer 40 zugeführt wird, der das Korn wiederum einer oberen Querförderschnecke 42 zuführt, die das Erntegut einer hinteren, auf der Längsmittelebene liegenden, im hinteren Bereich der vorderen Rahmeneinheit 10 vorgesehenen Stelle zuführt. Eine Rückführung des nur teilweise gereinigten Erntegutes zur Dresch- und Trennivrrichtung 28 erfolgt über einen nur teilweise dargestellten Überkehrelevator 44 (Fig. 1). An der vorderen Rahmeneinheit 10 befindet sich eine starr angeordnete Anhängedeichsel 46, die auf der Längsmittelebene liegt und sich von der Rahmeneinheit 10 nach hinten erstreckt. Die Rahmeneinheit 10 weist ferner einen oberen Querträger 48 auf, der im Bereich der Rückwand 50 am Gehäuse 18 angeordnet ist.

Die hintere Rahmeneinheit 12 weist ebenfalls ein Gehäuse 52 sowie einen zugehörigen Rahmen 54 auf, der auf Laufrädern 56 abstützbar ist. Das Gehäuse 52 besteht aus einer geneigten Vorderwand 58, einer Rückwand 60 sowie gegenüberliegenden Seitenwänden 62, die alle zusammen einen Sammelbehälter 63 bilden. Das Volumen des Sammelbehälters 63 füllt in etwa das gesamte Volumen des Gehäuses 52 der hinteren Rahmeneinheit 12 aus. Die obere Grenze des Sammelbehälters 63 bilden die Kanten 64 der Seitenwände 62. Ein Querträger 65 ist im Bereich der Oberkante der Rückwand 60 angeordnet. Der Sammelbehälter 63 wird über eine am Boden vorgesehene Förderschnecke 66 und eine schwenkbar angeordnet, Förderschnecken aufweisen de Entleerungsvorrichtung 68 entleert.

Der untere Lenker 16 ist als Anhängevorrichtung 70 ausgebildet, der mittels einer Dreheinrichtung 72 fest an das vordere Ende des Rahmens 54 der hinteren Rahmeneinheit 12 angeschlossen ist. Die Dreheinrichtung 72 gestattet eine Drehung zwischen der Anhängevorrichtung 70 und dem hinteren Gehäuse 52 um eine in Längsrichtung verlaufende Achse 73. Die Anhängedeichsel 70 ist an die Anhängedeichsel 46 der vorderen Rahmeneinheit 10 mittels eines Kupplungsbolzens 74 angekuppelt, der eine gegenseitige Verschwenkung der beiden Rahmeneinheiten 10 und 12 und eine aufrechte Achse bzw. Gelenkachse 76 ermöglicht und genügend Spielraum bietet um eine Verschwenkung um eine horizontale Querachse zu ermöglichen, die in etwa durch den Kupplungsbolzen 74 verläuft.

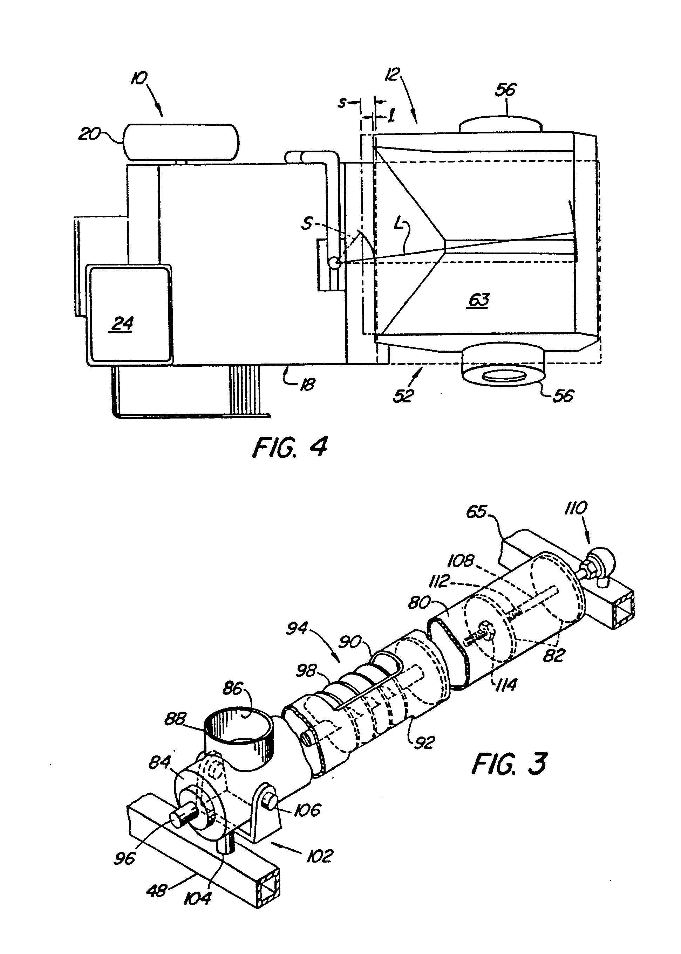

Der obere Lenker 14 ist in Fig. 1 und insbesondere in Fig. 3 veranschaulicht. Der Lenker 14 besteht aus einem als Fördergehäuse 80 ausgebildeten Rohr, dessen hinteres Ende mittels einer oder zwei Platten 82 und dessen vorderes Ende mittels einer Platte 84 verschlossen ist. Am vorderen Ende des Fördergehäuses 80 befindet sich ein nach oben zeigender Einlaßstutzen 88 mit einer nach oben gerichteten Einlaßöffnung 86. Im Bereich des hinteren Endes des Fördergehäuses 80, unmittelbar über dem Zentrum des Sammelbehälters 63 befinden sich zwei gegenüberliegende Auslaßöffnungen 90 und 92. Das Fördergehäuse 80 enthält eine auf einer Welle 96 angeordnete Förderschnecke 94 mit einer Schneckenwendel 98, die sich von einem stromaufwärtsliegenden Ende im Bereich der Einlaßöffnung 86 in den Bereich der Auslaßöffnungen 90 und 92 erstreckt. Ein Hydromotor 100 (Fig. 1) ist an das vordere Ende der Welle 96 angeschlossen und treibt die Förderschnecke 94 an.

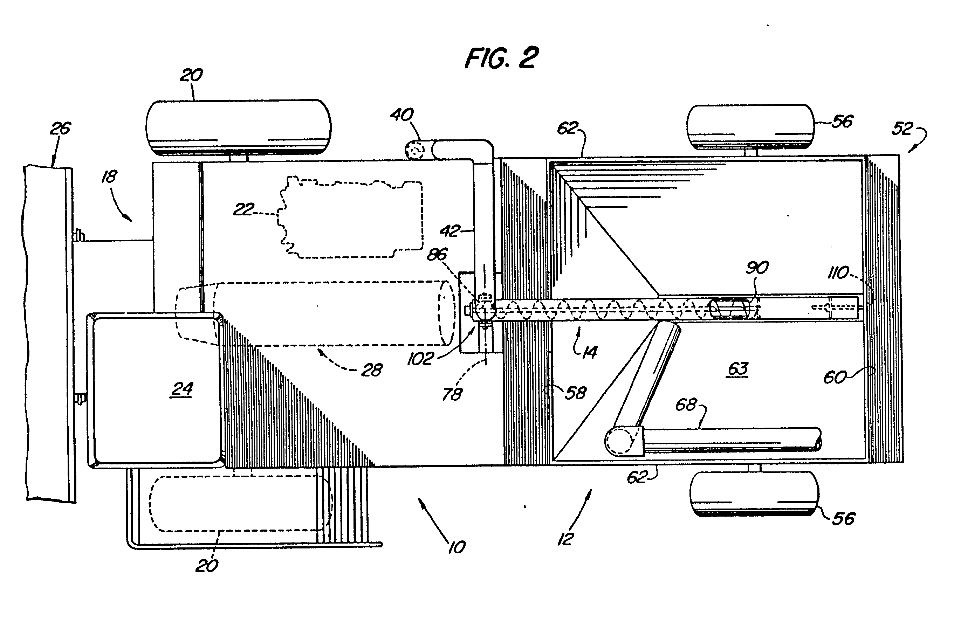

Der Gelenkmittelpunkt des oberen Lenkers 14 an der vorderen Rahmeneinheit 10 wird durch eine Drehzapfeneinrichtung 102 gebildet, die aus einem vertikal verlaufenden, am Querträger 48 vorgesehenen Schwenkzapfen 104 besteht und oberhalb des Querträgers 48 eine horizontale Verschwenkung des Lenkers 14 gestattet. Die Drehzapfeneinrichtung 102 besteht ferner aus zwei koaxial gegenüberliegenden, am Fördergehäuse angeordneten Zapfen 106, die in einer am Schwenkzapfen 104 angeschlossenen gabelförmigen Halterung aufgenommen sind. Die Drehzapfeneinrichtung 102 ermöglicht eine Verschwenkung um eine aufrechte und eine querverlaufende Achse, die einander schneiden und somit den Gelenkmittelpunkt bilden. Das hintere Ende des Fördergehäuses 80 weist zum Anschluß an die Rahmeneinheit 12 eine Schwenkachse 108 auf, die koaxial zum Fördergehäuse 80 in den Platten 82 aufgenommen ist und an ihrem Äußeren hinteren Ende eine Kugelgelenkeinrichtung 110 trägt, die auf dem oberen, hinteren Querträger 65 lagert. Im Bereich der vorderen Platte 82 weist die Schwenkachse 108 einen Gewindeteil 112 auf, auf dem zwischen Muttern 114 die vordere Platte 82 eingeklemmt ist. Durch verstellen der Platte 82 auf der Schwenkachse 108 kann die Gesamtlänge des oberen Lenkers 14 verändert werden. Die hier beschriebene Kupplungsvorrichtung zwischen den beiden Rahmeneinheiten 10 und 12 ermöglicht eine gegenseitige Verschwenkung der beiden Rahmeneinheiten um die in Längsrichtung verlaufende Schwenkachse 73, die aufrechtstehende Achse 76 sowie die Querachse 78 (Fig. 2), die durch die Deichsel 46 und den Kupplungsbolzen 74 verläuft. Der Schnittpunkt der Querachse 78 mit der Schwenkachse 73 kann auch als Gelenkmittelpunkt bezeichnet werden.

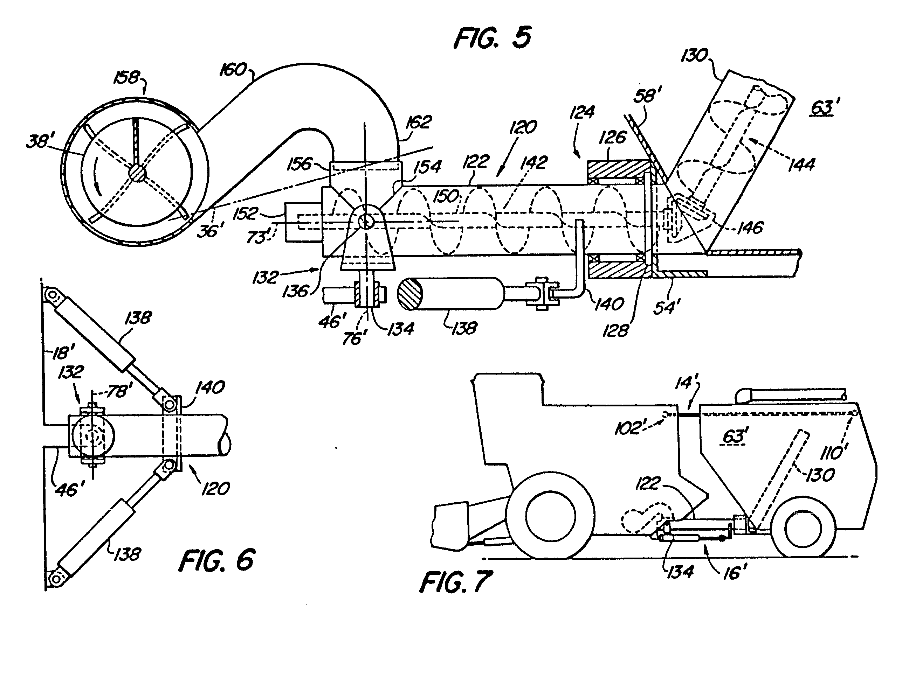

In einem anderen Ausführungsbeispiel gemäß Fig. 7 ist der obere Lenker 14' als einfaches Gestänge ausgebildet, während der untere Lenker 16' gemäß Fig. 5 zur Verbindung der beiden Rahmeneinheiten 10 und 12 als Fördervorrichtung 120 ausgebildet ist. Die als Fördervorrichtung 120 ausgebildete Anhängevorrichtung weist ein Fördergehäuse 122 auf; das drehbar in einer Drehlagereinrichtung 124 lagert, zu der ein Drehlager 126 gehört, das starr mit dem Rahmen 54' der hinteren Rahmeneinheit 12 verbunden ist. Ein Ringflansch 128 hält das Fördergehäuse 122 in der Drehlagereinrichtung 124. Ein geneigt verlaufendes Fördergehäuse 130 erstreckt sich nach hinten und nach oben in den Sammelbehälter 63 und steht mit dem horizontal verlaufenden Fördergehäuse 122 in Verbindung.

Das Fördergehäuse 122 verbindet die hintere Rahmeneinheit 12 mit der Deichsel 46' der vorderen Rahmeneinheit. Ein vertikal verlaufender Gelenkbolzen 134 und horizontal verlaufende Gelenkbolzen 136 ermöglichen eine Schwenkbewegung der hinteren Rahmeneinheit gegenüber der vorderen Rahmeneinheit um eine aufrechtstehende Achse 76 und eine quer verlaufende Achse 78' (Fig. 5, 6) während die Drehlagereinrichtung 124 eine Drehbewegung und 12 und eine in Fahrtrichtung verlaufende Achse 73' ermöglicht. Zwei Lenkzylinder 138 (siehe Fig. 6) sind einenends an der Rahmeneinheit 10 anderenends an eine mit der Fördervorrichtung 120 fest verbundenen Halterung 140 angeschlossen und dienen zur Lenkung des Mähdreschers. Die Lenkzylinder 138 werden über ein in der Zeichnung nicht dargestelltes Hydrauliksystem entsprechend mit Druckmittel versorgt. Eine ähnliche Lenkvorrichtung kann auch für einen Mähdrescher gemäß Fig. 1 und 2 verwendet werden. Die entsprechenden Anschlüsse der Lenkzylinder 138 an der Rahmeneinheit 10 sowie an der Halterung 140 können als Kugelgelenke ausgebildet sein, die eine oszillierende Bewegung der beiden Rahmeneinheiten 10 und 12 sowie die Knicklenkung des Mähdreschers zulassen. Gemäß Fig. 5 ist der untere Lenker 16 bzw. die Fördervorrichtung 120 durch miteinander verbundene Förderschnecken 142, 144 vervollständigt. Die Förderschnecke 142 verläuft horizontal und die sich daran anschließende Förderschnecke 144 geneigt. Die beiden Förderschnecken 142, 144 sind über Kagelräder 146 in einem Getriebegehäuse antriebsverbunden. Die Förderschnecke 142 weist eine Welle 150 auf, die sich in dem Fördergehäuse 122 der Fördervorrichtung 120 nach vorne erstreckt und mit einem Hydromotor 152 antriebsverbunden ist. An eine kreisförmige, nach oben gerichtete Einlaßöffnung 154 des Fördergehäuses 122 ist ein Einlaßstutzen 156 angeschlossen, der zur weiterleitung von Erntegut in das Fördergehäuse 122 dient. Der Einlaßstutzen 156 verläuft vertikal und koaxial zu der Achse 76', die durch den Bolzen 134 der Gelenkvorrichtung 132 gebildet wird. Somit behält die in dem Einlaßstutzen 156 vorgesehene Öffnung 154 bei einer horizontalen Schwenkbewegung des Lenkers 16' im wesentlichen ihre Lage bei, die zur Aufnahme des aus einen Fördergebläse 158 kommenden Erntegutes dient. Das Fördergebläse 158 ist koaxial zu einer Querförderschnecke 38' ausgerichtet und weist einen Förderkanal 160 mit einer Auslaßöffnung 162 zum Anschluß an den Einlaßstutzen 156 auf.

In Arbeitseinsatz (Fig. 5 und 7) fördert die Querförderschnecke 38' das Korn zum Fördergebläse 158 und nicht, wie bisher üblich, direkt zu eineim Elevatorförderer. Der Förderkanal 160 leitet das von dem Fördergebläse 158 abgegebene Erntegut in die Einlaßöffnung 154 der Fördervorrichtung 120. Die Förderschnecken 142 und 144 bewegen das Korn dann in einen Sammelbehälter 63'. Das Korn wird am oberen Ende des Fördergehäuses 130 fontänartig in das Zentrum des Sammelbehälters (Fig. 7) abgegeben.

Arbeitet der Mähdrescher auf unebenem Gelände, so findet eine oszillierende Bewegung zwischen der vorderen Rahmeneinheit 10 und der hinteren Rahmeneinheit 12 statt, wobei ein seitlicher Versatz des oberen Teils der hinteren Rahmeneinheit 12 (siehe Fig. 4) gegenüber der vorderen Rahmeneinheit 10 stattfindet. Fig. 4 zeigt einmal den seitlichen Versatz, die Abstandsveränderung zwischen den Rahmeneinheiten 10, 12 und den Knicklenkereffekt für einen kurzen, oberen Lenker S und einen langen, oberen Lenker L. Der Versatz des oberen Teils der hinteren Rahmeneinheit 12 erfolgt seitlich und etwas nach vorne. Bei Verwendung eines kurzen, oberen Lenkers S ist der Versatz wesentlich höher, als bei Verwendung des erfindungsgemäß längeren Lenkers L. Bei Verwendung des kurzen Lenkers S ist der Versatz nach vorne durch den Buchstaben s und bei Verwendung eines Lenkers L ist der Versatz durch den Buchstaben l gekennzeichnet. Bei

Verwendung eines relativ großen Lenkers wird bei Fahrten auf unebenem Gelände in vorteilhafter Weise gewährleistet, daß der Abstand zwischen den oberen Kanten der beiden Rahmeneinheiten 10 und 12 sich nicht wesentlich auswirkt, wie das bei Verwendung eines kurzen Lenkers der Fall wäre. Somit wird bei einer oszillierenden Bewegung zwischen den beiden Rahmeneinheiten 10, 12 der maximal notwendige Abstand zwischen den oberen Kanten der beiden Rahmeneinheiten 10 und 12 beibehalten. Durch Veränderung der wirksamen Länge des oberen Lenkers 14 kann dieser Abstand beeinflußt werden. Auf diese Weise kann bei Verwendung eines langen, oberer Lenkers 14 der Minimalabstand zwischen den beiden Rahmeneinheiten 10, 12 kleiner gewählt werden als bei Verwendung eines kurzen Lenkers, auch dann, wenn von einer relativ großen, oszillierenden Bewegung ausgegangen wird.

Wie aus Fig. 1 hervorgeht (ähnlich auch bei Fig. 7), ist der Abstand zwischen den Anschlußstellen des oberen Lenkers 14 (Drehzapfeneinrichtung 102, 102' und Kugelgelenkeinrichtung 110, 110') größer als der vertikale Abstand zwischen den Gelenkpunkten der beiden Rahmeneinheiten 10 und 12 (Kupplungsbolzen 74, 74' und Drehzapfeneinrichtung 102, 102').

Der Abstand zwischen den Anschlußstellen der oberen und unteren Lenker 14 und 16 der beiden Rahmeneinheiten 10 und 12, der in etwa der Höhe des Fahrzeuges entspricht sowie die Verwendung der horizontal verlaufenden Schwenkachse 73 bzw. 73' hat zahlreiche Vorteile. Die Schwenkachse 73 bzw. 73' liegt dicht über dem Boden, so daß die Hebelwirkungen und die inneren Kräfte, die auf Grund des seitlichen Versatzes der Laufräder während der oszillierenden Bewegung der beiden Rahmeneinheiten 10 und 12 auftreten, auf ein Minimum reduziert werden können. Die Kräfte, die auf die Anhängevorrichtung bzw. Fördervorrichtung 120 einwirken, sind relativ klein, da auch die Hebelwirkungen auf Grund des großen Abstandes zwischen den Anschlußstellen der Lenker gering sind. Der obere Lenker 14 ist so angeordnet, daß er mit anderen Teilen des Mähdreschers nicht kollidiert und aus Vorstehendem geht hervor, daß der Anschluß des hinteren Endes des oberen Lenkers 14 an die hintere Rahmeneinheit 12 besonders vorteilhaft ist. Es besteht außerdem ein ausreichender Abstand zwischen dem oberen Lenker 14 und den oberen Teilen der Rahmeneinheit 12, so daß der obere Lenker 14 mit keinem der Teile der hinteren Rahmeneinheit kollidiert.

Der maximale vertikale Abstand der einzelnen Gelenkvorrichtungsteile führt nicht nur zu kleinen Kräften in den Lenkern 14 und 16, sondern bei einer oszillierenden Bewegung der hinteren Rahmeneinheit 12 gegenüber der vorderen Rahmeneinheit 10 um den unteren Lenker 16' zu einem größeren Versatz im oberen Bereich der Rahmeneinheiten 12. Die Verwendung eines langen oberen Lenkers 14 nach der Erfindung ermöglicht eine größere oszillierende Bewegung zwischen der vorderen und hinteren Rahmeneinheit 10 und 12, da der Knicklenkereffekt des relativ langen, oberen Lenkers 14 klein ist. Befindet sich die vordere Gelenkstelle des oberen Lenkers 14 auf der gleichen vertikalen Ebene wie die untere Gelenkstelle, so verläuft die Gelenkachse 76, 76' aufrecht, und es findet beim Lenkvorgang keine Querneigung der hinteren Rahmeneinheit 12 gegenüber der vorderen Rahmeneinheit 10 statt.

Durch Verwendung des oberen Lenkers 14 kann mit einem Minimum an Bauteilen zur Verbindung der beiden Rahmeneinheiten 10, 12 ausgekommen werden, insbesondere dann, wenn der in etwa horizontal verlaufende Lenker auf der Längsmittelachse des Mähdreschers verläuft und relativ einfache Gelenke zum Anschluß der gegenüberliegenden Enden des Lenkers an der vorderen und hinteren Rahmeneinheit 10 und 12 benötigt. Durch Anschluß des entsprechenden Endes des oberen Lenkers 14 im Bereich des jeweiligen hinteren Teiles der vorderen und hinteren Rahmeneinheit 12 ist der vordere Teil der Rahmeneinheit 12 frei für andere notwendige Ausrüstungsteile des Mähdreschers. Ferner wird hierdurch der Zugang und die Wartungsarbeit an dem Mähdrescher bzw. den einzelnen Teilen des Mähdreschers sehr erleichtert. Wird beispielsweise das hintere Ende des oberen Lenkers 14 an einer Stelle hinter der Achse der Laufräder 56 an die hintere Rahmeneinheit 12 angeschlossen, beispielsweise an die Rückwand der hinteren Rahmeneinheit, so werden dadurch die Fahreigenschaften und Lenkvorgänge des Mähdreschers weiterhin verbessert, ohne daß hierzu der notwendige Platz für andere Bauteile des Mähdreschers zu stark beansprucht wird.

Der einmal als Verbindungselement und zum anderen als Fördergehäuse ausgebildete obere Lenker 14 (Fig. 1 und 2) ist so angeordnet, daß seine Längsachse auf der Längsmittelebene des Mähdreschers verläuft. Dies trägt zur Stabilisierung des Mähdreschers bei und ermöglicht auf einfache Weise eine zentrale Beschickung des hinteren Sammelbehälters 63. Eine Schwenkbewegung der einen oder anderen Rahmeneinheit 10 bzw. 12 um die horizontal verlaufende Achse 73 ruft auch eine gewisse Schwenkbewegung des oberen Lenkers 14 hervor und infolgedessen eine Bewegung der Öffnungen 90 und 92. Derartige seitliche Bewegungen der Öffnungen 90 und 92 sind relativ gering. Da eine Auslenkung der oberen Rahmeneinheit in beiden Richtungen erfolgt, wird Erntegut einmal auf der einen Seite und zum anderen auf der anderen Seite des im Sammelbehälter 63 befindlichen Schüttkegels abgegeben, so daß somit eine gleichmäßige, zentrale Beschickung des Sammelbehälters 63 gewährleistet bleibt. Durch die beiden länglichen Öffnungen 90 und 92 gemäß Fig. 1 wird der Sammelbehälter 63 mit einem relativ schwach ansteigenden Schüttkegel 170 befüllt bis die Öffnung 92 teilweise vom Erntegut umgeben ist (siehe Fig. 1). Die weitere Füllung des Sammelbehälters erfolgt über die Öffnung 90, und zwar so lange, bis sich der Schüttkegel 172 gebildet hat.

Aus Vorstehendem geht hervor, daß durch die Verwendung des oberen bzw. unteren, als Fördervorrichtung 120 ausgebildeten Lenkers 14 bzw 15 für einen Mähdrescher mit Knicklenkung ein einfacherer Transport des Erntegutes zwischen der vorderen Rahmeneinheit 10 und der hinteren Rahmeneinheit 12 gewährleistet wird. Die Verwendung des als Fördervorrichtung ausgebildeten Lenkers 14 bzw. 16 beeinträchtigt darüber hinaus nicht ihre Aufgabe zur Verbindung der beiden Rahmeneinheiten 10, 12. Die Fahreigenschaften und die Lenkung des Mähdreschers werden auch dann nicht beeinträchtigt, wenn die Lenker als Förderorgane eingesetzt sind. Durch Plazierumg der Einlaßöffnungen 86 auf der Schwenkachse 76 der beiden Rahmeneinheiten 10 und 12 kann auf zusätzliche Förderelemente zur Ermöglichung einer Schwenkbewegung zwischen den beiden Rahmeneinheiten verzichtet werden, die sonst notwendig wären, wenn die Einlaßöffnung an anderer Stelle plaziert wäre. Die relativ einfach ausgebildete Querförderschnecke 42 (Fig. 1) oder das Fördergebläse 158 mit dem Förderkanal 160 (Fig. 5) in Verbindung mit der Einlaßöffnung 86 bzw. 154 sind vorgesehen, um das Fördergehäuse 80 bzw. 122 zu beschicken. Die Aufnahme des Erntegutes in dem Fördergehäuse 80 bzw. 122 wird nicht wesentlich durch die Relativbewegungen zwischen den beiden Rahmeneinheiten 10 und 12 beeinträchtigt, beispielsweise bei einer Schwenkbewegung einer Rahmeneinheit 10 bzw. 12 um eine horizontal verlaufende Achse bzw. beim Lenkvorgang des Mähdreschers. Ein besonderer Vorteil des unteren als Fördervorrichtung ausgebildeten Lenkers 16' (siehe Fig. 5 und 7) wird in einer Vereinfachung der Konstruktion und in einer Verminderung der Kosten gesehen, da auf den Elevatorförderer 40 und die zugehörige Querförderschnecke 42 verzichtet werden kann. An Stelle dieser Förderorgane tritt das Fördergebläse 180 mit dem Förderkanal 160 sowie das Fördergehäuse 130 mit der Förderschnecke 144.

Keines der beiden Fördersysteme macht zur Befüllung des Sammelbehälters 63 bzw. 63' zusätzliche Nivelierungselemente erforderlich. Nach der Befüllungsvorrichtung gemäß Fig. 1 sind lediglich zwei Auslaßöffnungen 90 und 92 im Fördergehäuse 80 des oberen Lenkers 14 vorgesehen. Diese Auslaßöffnungen können durch zusätzliche Auslaßöffnungen vermehrt werden bzw. können diese so verlängert werden, daß auch längere oder breitere Sammelbehälter ohne weiteres befüllt werden konnen.

Durch die vorteilhafte Anordnung der Dresch- und Trennvorrichtung 28 auf der vorderen Rahmeneinheit 10 kann auch die Reinigungsvorrichtung 30 auf der vorderen Rahmeneinheit plaziert werden, so daß der Platz in der hinteren Rahmeneinheit 12 hauptsächlich für den Sammelbehälter 63 bzw. 63' zur Verfügung steht. Der einzige bewegliche Teil auf der hinteren Rahmeneinheit 12 ist die Entleerungsschnecke 68. Durch die relativ einfache Gestaltung der hinteren Rahmeneinheit 12 können die Herstellungskosten niedrig gehalten werden. Außerdem besteht hierdurch die Möglichkeit Rahmeneinheiten für Sammelbehälter mit unterschiedlichem Fassungsvermögen für einen Mähdreschertyp anzubieten.

Der in Fig. 5 und 7 vorgesehene, als Fördervorrichtung ausgebildete untere Lenker 16' ist ohne weiteres für eine Knicklenkerverbindung zweier Rahmeneinheiten verwendbar, die insgesamt aus dem oberen Lenker 14' sowie dem unteren Lenker 16' besteht.

**Patentansprüche**

1. Mähdrescher mit zwei über eine Gelenkeinrichtung verbundenen, um eine vertikale (76, 76') und eine in etwa horizontal verlaufende Achse (78, 78') gegenseitig verstellbaren, je eine Laufradachse aufweisenden hintereinander angeordneten Rahmeneiheiten (10, 12), wobei die Gelenkeinrichtung aus einem oberen Lenker (14) und einem unteren Lenker (16) gebildet ist, wobei diese Lenker mit Abstand zueinander angeordnet, an die Rahmeneinheiten (10, 12) angeschlossen und um quer zur Fahrtrichtung verlaufende horizontale und vertikale Achsen (76, 78') verschwenkbar sind, dadurch gekennzeichnet, daß eine Gelenkstelle (110, 110') des oberen Lenkers (14) im hinteren Bereich der hinteren Rahmeneinheit (12) vorgesehen ist.

2. Mähdrescher nach Anspruch 1, dadurch gekennzeichnet, daß die Gelenkstelle des oberen Lenkers (14) hinter der Achse der Laufräder (56) der hinteren Rahmeneinheit (12) vorgesehen ist.

3. Mähdrescher nach einem oder mehreren der vorherigen Ansprüche, dadurch gekennzeichnet, daß die Gelenkstellen des oberen Lenkers (14) jeweils im Bereich des hinteren Endes der vorderen bzw. hinteren Rahmeneinheit (10, 12) vorgesehen sind.

4. Mähdrescher nach einem oder mehreren der vorherigen Ansprüche, dadurch gekennzeichnet, daß sich der obere Lenker (14) in etwa horizontal dicht an der oberen Begrenzung der hinteren Rahmeneinheit (12) entlang erstreckt.

5. Mähdrescher nach einem oder mehreren der vorherigen Ansprüche, dadurch gekennzeichnet, daß der Abstand der Gelenkstellen des oberen Lenkers (14) in etwa dem Abstand zwischen den beiden Laufradachsen entspricht.

6. Mähdrescher nach Anspruch 1, dadurch gekennzeichnet, daß der Abstand der Gelenkstellen des oberen Lenkers (14) größer ist als der halbe Abstand zwischen den beiden Laufradachsen.

7. Mähdrescher nach einem oder mehreren der vorherigen Ansprüche, dadurch gekennzeichnet, daß die vordere Gelenkstelle des oberen Lenkers (14) an der vorderen Rahmeneinheit (10) auf einer vertikal verlaufenden Knicklenkerachse (Gelenkachse 76) des Mähdreschers liegt.

8. Mähdrescher nach einem oder mehreren der vorherigen Ansprüche, dadurch gekennzeichnet, daß der obere und der untere Lenker (14, 16) einen großen Abstand untereinander aufweisen und jeweils dicht an der oberen bzw. unteren Begrenzung des Mähdreschers bzw. der Rahmeneinheiten (10, 12) vorgesehen sind, wobei der untere Lenker eine gegenseitige Verschwenkung der beiden Rahmeneinheiten um eine in Fahrtrichtung horizontal verlaufende Schwenkachse (73) zuläßt.

9. Mähdrescher nach Anspruch 8, dadurch gekennzeichnet, daß die in Fahrtrichtung verlaufende Schwenkachse (73) im Bereich der unteren Begrenzung der hinteren Rahmeneinheit verläuft.

10. Mähdrescher nach einem oder mehreren der vorherigen Ansprüche, dadurch gekennzeichnet, daß der Abstand zwischen den beiden Gelenkstellen des oberen Lenkers (14) größer ist als der Abstand zwischen dem oberen und dem unteren Lenker (14, 16).

## Claims

1. Harvester thresher with two structural units (10, 12) arranged one behind the other, interconnected by a flexible coupling arrangement,adjustable with respect to each other about a vertical axis (76, 76') and an approximately horizontally extending axis (78, 78') and each having a road wheel axle, in which the flexible coupling arrangement consists of an upper steering link (14) and a lower steering link (16) which are arranged in spaced relationship to each other, are connected to the structural units (10 12) and are pivotable about horizontal and vertical axes (76, 78) extending transversely to the direction of travel, characterised in that a joint portion (110, 110') of the upper steering link (14) is located in the rear part of the rear structural unit.

2. Harvester thresher according to claim 1, characterised in that the said joint portion of the upper steering link (14) is located rearwardly of the axle of the road wheels (56) of the rear structural unit (12).

3. Harvester thresher according to one or more of the preceding claims, characterised in that the joint portions of the upper steering link (14) are located in the region of the rear ends of the front and rear structural units (10, 12) respectively.

4. Harvester thresher according to one or more of the preceding claims, characterised in that the upper steering link (14) extends approximately horizontally along and close to the upper boundary of the rear structural unit (12).

5. Harvester thresher according to one or more of the preceding claims, characterised in that the distance between the joint portions of the upper steering link (14) corresponds approximately to the distance between the two road wheel axles.

6. Harvester thresher according to claim 1, characterised in that the distance between the joint portions of the upper steering link (14) is equal to more than half the distance between the two road wheel axles.

7. Harvester thresher according to one or more of the preceding claims, characterised in that the front joint portion of the upper steering link (14) which is connected to the front structural unit (10) is located on a vertically extending articulated steering axis (joint axis 76) of the harvester thresher.

8. Harvester thresher according to one or more of the preceding claims, characterised in that the upper and lower steering link (14, 16) have a relatively large space between each other and are located close to the upper and lower boundaries respectively of the harvester thresher or of the structural units (10, 12), the lower steering link permitting a relative swivelling movement of the two structural units about a rotational axis (73) extending horizontally in the direction of travel.

9. Harvester thresher according to claim 8, characterised in that the rotational axis (73) extending in the direction of travel extends in the region of the lower boundary of the rear structural unit.

10. Harvester thresher according to one or more of the preceding claims, characterised in that the distance between the two joint portions of the upper steering link (14) is greater than the distance between the upper and lower steering link (14, 16).

## Revendications

1.- Moissonneuse-batteuse comportant deux parties de châssis (10, 12) placées l'une derrière l'autre reliées par un dispositif d'articulation, pouvant se déplacer l'une par rapport à l'autre autour d'un axe vertical (76, 76') et d'un axe sensiblement horizontal (78, 78'), comportant chacune un essieu muni de roues porteuses, le dispositif d'articulation étant formé par une bielle de direction supérieure (14) et une bielle de direction inférieure (16), ces bielles étant placées à distance l'une de l'autre, articulées aux parties de châssis (10, 12) et pouvant pivoter autour d'un axe vertical et d'un axe horizontal s'étendant transversalement par rapport à la direction de déplacement du véhicule (76, 78), caractérisée en ce qu'un point d'articulation (110, 110') de la bielle de direction supérieure (14) est prévu dans la zone postérieure de la partie de châssis postérieure (12).

2.- Moissonneuse-batteuse suivant la revendication 1, caractérisée en ce que le point d'articulation de la bielle de direction supérieure (14) est prévu derrière l'essieu muni des roues de roulement ou roues porteuses (56) de la partie de châssis postérieure (12).

3.- Moissonneuse-batteuse suivant une ou plusieurs des revendications précédentes, caractérisée en ce que les points d'articulation de la bielle de direction supérieure (14) sont prévus respectivement au voisinage de l'extrémité postérieure de la partie de châssis antérieure (10) et de la partie de châssis postérieure (12).

4.- Moissonneuse-batteuse suivant une ou plusieurs des revendications précédentes, caractérisée en ce que la bielle de direction supérieure (14) s'étend sensiblement horizontalement au voisinage immédiat de la limite supérieure de la partie de châssis postérieure (12).

5.- Moissonneuse-batteuse suivant une ou plusieurs des revendications précédentes, caractérisée en ce que la distance des points d'articulation de la bielle de direction supérieure (14) correspond à peu près à la distance entre les deux essieux pourvus de roues porteuses.

6.- Moissonneuse-batteuse suivant la revendication 1, caractérisée en ce que la distance entre les points d'articulation de la bielle de direction supérieure (14) est supérieure à la moitié de la distance entre des deux essieux pourvus de roues porteuses.

7.- Moissonneuse-batteuse suivant une ou plusieurs des revendications précédentes, caractérisée en ce que le point d'articulation antérieur de la bielle de direction supérieure (14) à la partie de châssis antérieure (10) se trouve sur un axe de direction pivotante (axe d'articulation 76) vertical de la moissonneuse-batteuse.

8.- Moissonneuse-batteuse suivant une ou plusieurs des revendications précédentes, caractérisée en ce que la bielle de direction supérieure (14) et la bielle de direction inférieure (16) sont à une grande distance mutuelle et sont prévues au voisinage immédiat, respectivement de la limite supérieure et de la limite inférieure de la moissonneuse-batteuse ou des parties de châssis (10, 12), la bielle de direction inférieure permettant un pivotement mutuel des deux parties de châssis autour d'un axe de pivotement (73) s'étendant horizontalement dans la direction de déplacement du véhicule.

9.- Moissonneuse-batteuse suivant la revendication 8, caractérisée en ce que l'axe de pivotement (73) s'étendant dans la direction de déplacement du véhicule se trouve au voisinage de la limite inférieure de la partie de châssis postérieure.

10.- Moissonneuse-batteuse suivant une ou plusieurs des revendications précédentes, caractérisée en ce que la distance entre les deux points d'articulation de la bielle de direction supérieure (14) est supérieure à la distance entre la bielle de direction supérieure (14) et la bielle de direction inférieure (16).

FIG. 1

FIG. 2

0 092 804

FIG. 4

FIG. 3

5

FIG. 5

FIG. 6

FIG. 7